# EUROPEAN PATENT APPLICATION

(11) **EP 0 606 598 A2**
(43) Date of publication of application: **20.07.1994**
(21) Application number: 93120176.8
(22) Date of filing: 15.12.1993
(51) Int. Cl.: G02B 1/04, G02B 6/16

(54) **Shaped articles of graduated refractive index exhibiting low dispersion**

(30) Priority: 18.12.1992 US 993935
(71) Applicant: HOECHST CELANESE CORPORATION, Somerville, N.J. 08876 (US); Koike, Yasuhiro, Yokohama 225 (JP)
(72) Inventor: Forbes, Charles E., Bridgewater, New Jersey (US); Koike, Yasuhiro, Yokohama 225 (US); Lanieve, Leslie H., III, Warren, New Jersey (US)
(74) Representative: von Kreisler, Alek, Dipl.-Chem.

(57) **Abstract**

A monolithic, thermoplastic article with a continuously graded refractive index is formed by polymerizing a fluorinated matrix polymer in the presence of a low molecular weight, substantially unreactive guest molecule of different refractive index than the matrix polymer. The thermoplastic articles may be used to produce shaped articles such as optical waveguides, fibers or lenses of low attenuation and high bandwidth.

## Description

### TECHNICAL FIELD

The present invention relates to optical materials of the graded index type formed from a low attenuation fluorinated polymer host matrix/small guest molecule preform. The preform is polymerized from a matrix/guest molecule mixture so that a stable concentration and refractive index gradient is established in the preform. Optical materials having a graduated refractive index, such as optical fibers are produced from the preforms.

### BACKGROUND OF THE INVENTION

The desirable properties of a long distance transmitter optical fiber include flexibility, low signal attenuation, and minimal phase shift. Fiber optic waveguides usually consist of a core material and a tube/clad material with different indices of refraction. In order to achieve long transmission distances of light signals, the core and tube/clad material should absorb as little light as possible, and the core material should have a higher index of refraction than the tube/clad. In addition to the core and cladding construction of fibers, graded index optical materials are also known in the art.

Graded index fibers have a relatively higher refractive index in the center core area which decreases gradually and radially from the center axis outward. Prior art graded index optical materials were often formed from inorganic optical substrate materials, such as glass, by doping the substrate with ionic substances by ion exchange or other methods. Graduated index ("GRIN") optical materials have also been produced from organic polymer materials by using various methods each of which contains inherent problems.

Copolymerization is used to produce GRIN optical articles from two or more types of monomers of different reactivities. The relative proportion of monomer units per polymer is designed to vary from that of the early polymerization period to that of the late polymerization period in order to produce a refractive index which is different between the core and periphery of the article.

An example of copolymerization is United States Patent No. 4,521,351 which discloses a method of making a preform for drawing into an optical fiber by way of polymerizing a mixture of at least three vinyl monomers having different reactivities. The mixture is put into a container of appropriate shape and the reaction is initiated at the outside surface. Due to different reaction rates, a polymeric article is formed having gradients of the monomeric constituents so that a graduated index is achieved. A typical three component mixture includes methyl methacrylate, vinyl benzoate and vinyl phenylacetate. The mixture must exhibit both appropriate reactivities and upon polymerization, the desired refractive properties.

In copolymerization, however, the problem arises that the monomers of slower reactivity compounds may remain independent or incomplete instead of linking as a copolymer. The slowly reactive monomers may therefore contribute to changes of the optical elements and render products such as waveguides less transparent.

An alternative production method for producing an organic polymer refractive gradient index product is directed to diffusion of, two or more different types of monomer through a prepolymer matrix. At first, under heat or U.V. light the polymer precursor or prepolymer gel of a first monomer forms a transparent bridge structure or matrix of a desirably low refractive index. Monomers are allowed to diffuse through the gel in a manner dependent on their particular mobility, and are then polymerized to form a polymer of graded refractive index. The graded index in this method varies according to the ratio of concentration of unreacted monomer in the gel to the concentration of monomer.

For example, United States Patent 3,955,015 teaches a method of making a polymeric article including the steps of: (1) partially polymerizing a network polymer such as diallyl phthalate so that it is partially insoluble; (2) shaping the article; (3) applying a second monomer (methyl methacrylate) to the surface of the article so formed such that it diffuses inwardly, followed by (4) completing polymerization of the second monomer within the network polymer. Materials are selected and diffusion is carried out so that an index gradient is created by way of compositional variance.

In this diffusion type process it is difficult to control the conditions of polymerization so that monomer diffusion results in a sufficiently graded distribution of refraction indices. Moreover, polymer gels or precursors produced from different polyfunctional monomers exhibit varied physical characteristics during heat-stretching or drawing to a long optical waveguide or fiber which may lead to undesirable quality defects.

The present invention is therefore directed to a synthetic plastic having a graded refractive index distribution formed by polymerizing a basic matrix monomer in the presence of a small unreactive guest molecule that does not participate in the polymerization.

### SUMMARY OF THE INVENTION

In accordance with the present invention, a shaped article of graduated refractive index is formed by polymerizing a fluorinated monomeric system to form a matrix polymer in the presence of a substantially unreactive low molecular weight compound. The low molecular weight compound or guest molecule has a different refractive index than the matrix polymer formed in situ and is soluble in the fluorinated monomer and matrix polymer.

Polymerization is initiated at a surface of the polymerization vessel and as polymerization progresses, the substantially unreactive compound diffuses within the article towards the center or core so that refractive index gradient in a specific direction is obtained. The refractive index of the shaped articles of the present invention is continuously and radially varied from the center of the shaped article. The preferred difference in refractive index between the core and periphery of the article is at least 0.001.

The shaped article may be formed by using a container tube as the polymerization reactor to produce the monolithic article. Alternatively the tube reactor is first used to produce a cladding polymer reaction tube, which cladding in turn serves as the polymerization vessel and becomes a part of the monolithic article upon completion of the reaction. In such a process, the polymer of the cladding tube must expand as a gel in the presence of the core matrix monomer and must be at least partially soluble therein. As the inner polymer wall of the polymer container swells and partially dissolves in the monomeric core mixture placed inside the polymer container, the core monomer simultaneously undergoes successive polymerization. The polymerization occurs more rapidly in the gel state of the inner wall of the container. As the polymerization proceeds, the unreactive guest molecule component migrates toward the center of the article. After the polymerization has been completed the concentration gradient of the unreactive high refractive index component is continuously increasing from the periphery to the core area of the polymeric monolithic body. The refractive index profile of the article is also present as a gradient.

Articles such as an optically transparent polymeric preform rod having a gradient refractive index produced by this method are suitable for hot-stretching into optical wave guides or fiber embodiments which retain a proportionate distribution of refractive indices.

The present invention also concerns a process for the fabrication of monolithic transparent thermoplastic moldings or shaped articles comprising the steps of (a) forming an outer shaped portion, such as a tube of cylindrical dimensions, by radically polymerizing a fluorinated monomeric system in a suitable vessel; (b) forming a central portion within the outer shaped portion by radically polymerizing the fluorinated monomeric system in the presence of at least one substantially unreactive, low molecular weight component, the polymerization being initiated at the surface of the shaped portion while allowing the shaped portion itself to simultaneously expand and dissolve in the central fluorinated monomeric system; the polymer and the substantially unreactive component cooperating to form the monolithic molding with a radially graduated refractive index.

The process may be used to manufacture a variety of shaped articles, and in particular, preforms with a graded refractive index useful in manufacturing optical fibers. Preforms from the monolithic transparent thermoplastic molding produced by the inventive process may be further drawn out into polymer optical fibers with application of a suitable amount of heat. Optical fibers with a core of about 0.1 mm to about 0.6 mm in diameter and a cladding of about 0.1 to about 10.0 mm in diameter are preferred. The optical fibers of the invention have a low attenuation effect, dB/km, preferably ranging from about 10 to about 400.

### BRIEF DESCRIPTION OF THE DRAWINGS

Fig. 1 is a top view of the apparatus of Fig. 2;
Fig. 2 is a schematic view in elevation of an apparatus used for polymerizing mixtures prepared in accordance with the present invention;
Fig. 3 is a schematic view in elevation of an apparatus useful for drawing optical fiber from preforms prepared in connection with the apparatus of Figs. 1 and 2;
Fig. 4 depicts a graph of refractive index distribution of a poly 3FMA graded index ("GRIN") preform rod;
Fig. 5 shows a profile of output pulse spread through poly 3FMA graded index polymer optical fiber ("GRIN POF"), for a fiber length of 40 cm;
Fig. 6 is a profile representing total attenuation spectrum (A) NMA based GRIN POF, (B) 3FMA based GRIN POF;

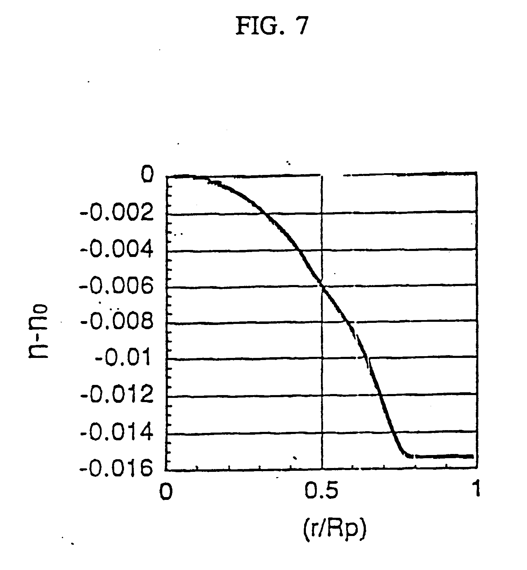

Fig. 7 is a refractive index distribution of a poly HFIP2FA GRIN preform rod; and
Fig. 8 is an attenuation spectrum of poly HFIP2FA GRIN POF.

### DETAILED DESCRIPTION OF THE INVENTION

The invention is described in detail below in connection with the figures and examples which are provided for purposes of illustration only. Various modifications will be readily apparent to those of skill in the art.

As will further be appreciated by one of skill in the art, different refractive indices between core and cladding in an optical fiber may be achieved by varying conditions of fabrication, polymerization or both. In the present invention the polymeric shaped articles can be provided with a refractive index gradient by controlling the distribution of high index components in accordance with the desired index gradient. In general, fibers produced in accordance with the present invention may have a difference in refractive index, Δn_{D}²⁰, between the core and the periphery of as low as about 0.0002; more typically greater than about 0.005.

When Δn is less than 0.0002, the light is weakly trapped in the core. In such a case, the fiber transmission capacity decreases, since the light rays are likely to be unguided when the optical fiber is bent or coiled.

The graded refractive index within the shaped polymer articles of the invention is related to the presence of a optically compatible small "guest" molecule in the composition. The guest molecule component should not react with the monomers of the polymer of which the article is made and must be optically compatible compound under the conditions of interest with the polymer matrix host system. In general, the features that the substantially unreactive "guest" component should possess are: (1) that it have a relatively high boiling point for purposes of stability, at least about 100°C or higher; (2) that it be highly miscible with the reactive monomeric system so that homogeneity is achieved; (3) that it remain optically isotropic and not crystallize under conditions of fabrication or use; and (4) that it have a suitable refractive index difference from the matrix polymer. Such conditions are referred to hereinafter as "optical compatibility" or as "being optically compatible" as the case may be. In addition, the mobility of the small guest molecule in the polymer matrix should be so low that migration does not occur in the temperature ranges from about -40°C to about 90°C.

The substantially unreactive component is preferably also a halogenated compound. The highly refractive nonreactive guest compound additive in the mixture should have a solubility difference with the polymer of the matrix from about 5 to about 7 (cal/cm³)^{½} or less and a difference of refractive index of at least 0.001. Typical concentrations of the substantially unreactive low molecular weight component are from about 1 to about 30 percent by weight of the mixture and preferably 1 to 20 percent by weight of the mixture.

One embodiment involves polymerizing an optically high transmission polymer of low refractive index in the presence of an effective amount of a substantially unreactive low molecular weight material ("guest molecule') having a relatively higher refractive index. The reaction occurs in a cylindrical reaction vessel, e.g., a glass tube in essentially a one step process and does not require the production and use of a cladding polymer tube polymerization vessel. The polymerization process is preferably of the free radical type (i.e. u.v. or heat initiation) and conveniently takes place in a rotary vessel upon application of suitable heat or irradiation such as furnished by U.V. light depending on the polymer system.

During polymerization, the low refractive index polymeric matrix initially forms near the internal wall of the cylindrical polymerization vessel and proceeds seguentially toward the center axis of the vessel. As the polymerization progresses some of the small high refractive index guest molecules are entrapped within the forming polymer matrix while others migrate toward the as yet unreacted core of the vessel. In the final product shaped article the concentration of the low molecular weight guest molecule within the polymeric matrix is low near the periphery, but gradually increases in concentration toward the center axis. This concentration gradient is a consequence of the progression of formation of the polymer matrix. The polymeric preform thus will exhibit a changing refractive index which is highest in the area about the center axis and gradually decreases to the lowest index number characteristic for the basic homopolymer matrix near the periphery of the article.

In another embodiment of the invention a graduated index optical fiber may be produced in a preferred embodiment by a two-step procedure. First, a polymeric cladding or tube container which will be a part of the final preform is produced. The cladding tube comprises a polymer which has the desirable characteristics of relatively low refractivity and high signal transparency and is produced in a suitable cylindrical vessel. Second, the core portion, which preferably comprises the same polymer as the cladding is polymerized within the container from a mixture of a monomeric substance with the addition of an effective amount of a relatively high index low molecular weight guest molecule. As described for the single step preform above, the substantially unreactive additive or doping molecule is distributed in the core portion so that it forms a gradient of a high refractive index value at the center axis region while decreasing toward the periphery. The cladding polymer, which is preferably a halogenated or more preferably a fluorinated homopolymer, must be soluble in the core mixture of the basic fluorinated matrix monomer. The monomer and the low molecular weight high refractive index guest molecule additive are able to diffuse into the at least partially expanding or dissolving matrix on the inside surface of the cladding polymer portion to form a gel-like state. The polymerization is initiated in the gel-like state and proceeds towards the center of the article forming the small molecule concentration gradient discussed above. Due to the uniformity and solubility of the polymer the two-step or bicomponent polymerization results in a monolithic article.

In a preferred embodiment, a polymer matrix is selected which is produced by free radical polymerization. Radical polymerization is initiated by the free radicals produced from a radical polymerization initiator present in the solution and driven by irradiation energy. The energy source, e.g., U.V. light or I.R. lamp, is near the periphery of the reaction vessel. Consequently, the polymerization proceeds from the inside walls of the container toward the center gradually depleting the monomer concentration of the remaining solution. The reaction vessel may be rotated at a suitable velocity in order to evenly redistribute the energy input as well as the monomeric solution. The unreactive high refractive index guest compound concentration increases towards the center as the polymer matrix formation progresses toward the center of the reaction vessel. This results in a refractive index gradient from the periphery to the center axis of the article produced.

In another preferred embodiment of the invention, graded index thermoplastic preforms produced by the methods of the invention are used to manufacture optical fibers. As is well-known to those skilled in the art, the thermoplastic optical fiber product is usually formed by heat-elongation or heat-stretching from a so-called preform of relatively short and thick dimensions wherein the structural components and their distribution are set. The much narrower transverse dimensions of the final fiber product have a graded refractive index similar and related to that of the preform from which they are produced.

The optical fiber base material suitable for the heat-stretch production of a single-mode plastic optical fiber may be applied in any of several geometric shapes, the preferred being cylindrical or rod-like. For example, a cylindrical preform transmitter having a refractive index which gradually decreases radially from a relatively high refractive index value at the center axis region (core) to a relatively low refractive index value at the peripheral region is designated as a convex lens-acting optical transmitter. This type of light transmitter is preferably used to manufacture a bar-type lens or an optical fiber.

The polymer matrix of the shaped articles of the invention are comprised of fluorinated polymers. Fluorinated compounds are particularly suited as polymer optical transmitters since their attenuation is favorably low at wavelengths about 700 nm, i.e. in the visible spectrum. Moreover, the light transmission of fluorinated polymer optic waveguides is clearly improved compared with the state of the art and with optic waveguides containing polymers derived from monomer units which for the most part contain hydrogen atoms. The optic waveguides manufactured from these fluorinated polymers can also be used in the wavelength range of 850 nm in which high performance luminous diodes and semiconductor lasers as well as receivers are available so that long transmission distances of light signals are possible.

Fluorinated polymers useful in the present invention as the polymer matrix must have a high glass transition point and high light transmittance. Those fluorinated polymers are preferably used which display higher transparency than polymethyl methacrylate (PMMA), a polymer used in the prior art for the manufacture of optical fibers.

The initial material for the synthesis of the fluorine-containing polymer may be a compound of formula I: 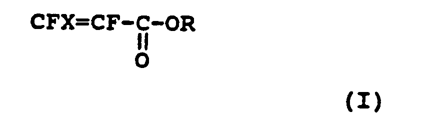
wherein X is a hydrogen atom or a deuterium atom, and R is a linear, branched or cyclic C₁-C₁₀ alkyl group or a C₆-C₁₀ aryl group. The hydrogen atoms of R may be completely or partially replaced by fluorine, chlorine, or bromine atoms.

The acid component of the esters, preferably consists of 2,3-difluoroacrylic acid or 3-deutero-2,3-difluoroacrylic acid.

The alcohol component is preferably methanol, a fluorine or chlorine-containing linear or branched or alicyclic alcohol with 2 to 10 carbon atoms or an aromatic alcohol with 6 to 10 carbon atoms. Preferred are methanol, chlorine and fluorine containing linear or branched, or alicyclic alcohols with 3 to 10 carbon atoms as well as phenols and benzyl alcohol. Especially preferred are methanol, hexafluoroisopropanol and 2-deuterohexafluoroisopropanol, alkyl and aryl substituted hexafluoroisopropanols such as perfluoro-2,3-dimethyl-2-butanol, 2-pentafluorophenylhexafluoroisopropanol and 2-(p-fluorophenyl)hexafluoroisopropanol, fluorine-and chlorine-containing cyclopentanols and cyclohexanols as well as 1,4,5,6,7,7-hexachloro- and hexabromobicycloheptenol, 1,4,5,6,7-pentachloro- and 1,4,5,6-tetrachlorobicycloheptenol, 5,5,6,6-tetrakis(trifluoromethyl)bicycloheptanol, 5,6-difluoro-5,6,-(trifluoromethyl)bicycloheptanol, 5,5,6,6-tetrafluorobicycloheptanol, 1,4,5,5(or 6,6),7,8-hexachloro-6(or -5)oxobicyclooctenol or (1,4,5,6,7,7-hexachlorobicycloheptenyl)methanol and their deuterated derivatives, as well as pentafluoro, pentachloro- and pentabromophenol.

Preferably esters wherein the hydrogen atoms of the alcohol in the acid component are replaced as completely as possible by deuterium, fluorine, chlorine or bromine atoms are used. Preferred esters are methanol-d₃, 2-deuterohexafluoroisopropanol, trichloroethanol-d₂, 3-pentafluorophenylhexafluroisopropanol, perfluoro-2,3-dimethyl-2-butanol, perfluoro- or perchlorocyclopentanol or cyclohexanol as well as 1,4,5,6,7,7-hexachloro and -hexabromobicycloheptenol-d₃, 5,6-difluoro-5,6-bis (trifluoromethyl)bicycloheptanol-d₁₁, 5,5,6,6-tetrakis (trifluoromethyl) bicycloheptanol-d₁₁, 5,5,6,6,-tetrafluorobicycloheptanol-d₁₁, 1,4,5,5(or 6,6),7,8-hexachloro-6 (or-5)oxobicyclooctenol-d₃, or (1,4,5,6,7,7-hexachlorobicycloheptenyl)methanol-d₅, pentafluorophenol or pentachlorophenol.

It is preferred that the hydrogen atom in the acid component, and possibly the hydrogen atom or atoms in the alcohol component be replaced by one or more deuterium or fluorine atoms since the hydrogen atoms may impair the transparency of the polymers in the useful visible and in the near-infrared region of the electromagnetic spectrum.

The 2,3-difluoroacrylic acid esters according to Formula I may be synthesized by esterification of 2,3-dichloro-2,3-difluoropropionic acid or a corresponding acid halide with an alcohol of the formula R-OH, where R has the meaning given in Formula I, and subsequent dehalogenation with zinc. The corresponding 3-deutero-2,3-difluoroacrylic acid esters are obtained by esterification of the 3-deutero-2,3-difluoroacrylic acid or its acid halide with an alcohol as described above.

In a preferred embodiment the polymer matrix of the shaped articles of the invention may be produced from units derived from one or more esters of formula II: 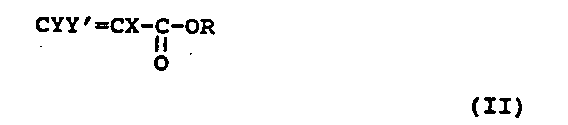
where X denotes a hydrogen or a deuterium atom, C₁-C₆ alkyl, preferably methyl, or a fluorine atom; Y denotes a hydrogen or a deuterium atom; Y' denotes a hydrogen or deuterium atom; and R is a linear, branched or cyclic C₁-C₁₀ alkyl group. The hydrogen atoms in X, when X is C₁-C₆ alkyl, or R may be totally or partially replaced by fluorine atoms.

Suitable fluorinated polymers are polymeric 2-fluoroacrylic acid esters, especially esters of aliphatic alcohols. These polymeric materials may contain deuterium atoms both in the alcohol and also in the β position of the 2-fluoroacrylic acid component (see EP 128517). These polymers have indices of refraction between 1.45 and 1.60 and glass transition points between 100° and 200°C and thus may serve as the polymer matrix material for optic waveguides or optic fibers. Polymeric 2-fluoroacrylic acid esters of bromine, chlorine, fluorine or deuterium containing alcohols may also be used.

Especially preferred are polymers obtained essentially from 2-fluoroacrylic acid methyl esters, from 2-fluoro- and 2,3-difluoroacrylic acid esters, methacrylic acid esters and acrylic acid esters, of hexafluoroisopropanol and 2-deuterohexafluoroisopropanol, alkyl and aryl substituted hexafluoroisopropanols such as perfluoro-2,3-dimethyl-2-butanol,2-pentafluorophenylhexafluoroisopropanol and 2-(*p-*fluorophenyl)hexafluoroisopropanol, fluorine- and chlorine-containing cyclopentanols and cyclohexanols as well as 1,4,5,6,7,7-hexachloro- and hexabromobicycloheptenol, 1,4,5,6,7-pentachloro- and 1,4,5,6-tetrachlorobicycloheptenol, 5,5,6,6-tetrakis(trifluoromethyl)bicycloheptinol, 5,6-difluoro-5,6-(trifluoromethyl)bicycloheptanol, 5,5,6,6-tetrafluorobicycloheptanol, 1,4,5,5(or 6,6),7,8-hexachloro-6(or -5)oxobicyclooctenol or (1,4,5,6,7,7-hexachlorobicycloheptenyl) methanol and their deuterated derivatives, as well as pentafluoro, pentachloro- and pentabromophenol.

Preferably esters wherein the hydrogen atoms of the alcohol in the acid component are replaced as completely as possible by deuterium, fluorine, chlorine, or bromine are used. Preferred esters are methanol-d₃, 2-deuterohexafluoroisopropanol, trichloroethanol-d₂, 3-pentafluorophenylhexafluoroisopropanol, perfluoro-2,3-dimethyl-2-butanol, perfluoro- or perchlorocyclopentanol or cyclohexanol as well as 1,4,5,6,7,7-hexachloro and -hexabromobicycloheptenol-d₃, 5,6-difluoro-5,6-bis(trifluoromethyl)bicycloheptanol-d₁₁, 5,5,6,6-tetrakis(trifluoromethyl)bicycloheptanol-d₁₁, 5,5,6,6-tetrafluorobicycloheptano-d₁₁, 1,4,5,5(or 6,6),7,8-hexachloro-6(or -5)oxobicyclooctanol-d₃, or (1,4,5,6,7,7-hexachlorobicycloheptenyl)methanol-d₃, pentafluorophenol or pentachlorophenol.

Preferred polymers for producing GRIN preforms useful for the manufacture of optical fibers are poly(trifluoroethyl-2 fluoroacrylate) ("poly 3FFA3"); poly-(trifluoroethyl methacrylate ("poly 3FMA"); and poly-(2-fluoroacrylic, hexafluoroisopropyl acid) ("poly HFIP2FA"). Of these polymers, poly 3FFA is not very soluble in its monomer FFA and is therefore not useful in the two-step polymerization process of the invention using the first step preparation of the cladding tube. Poly 3FMA and poly HFIP2FA are soluble in their monomers and thus useful in both methods of the invention. The preffered 2-fluoroacrylic acid monomer is 2-fluoroacrylic acid hexafluoroisopropyl ester ("HFIP2FA").

Substantially unreactive small guest molecules are understood to include lov molecular weight compounds which do not polymerize with the basic monomers or polymeric matrix. It is presumed that the small molecules do not react radically within the condition parameters prevailing during the gel formation and post polymerization treatment. Typically, the low molecular weight guest compounds are selected from certain high refraction index aliphatics or alkylaromatics, which may be optionally substituted with, e.g., halogen atoms and preferably fluorine atoms. The guest molecule of course must be selected so that it is optically compatible with the particular polymer system of the shaped article.

Suitable small molecules may be selected from, but not limited to, the group of dibutyl phthalate, benzyl benzoate, butyl phenyl phthalate, benzyl-n-butylphthalate, 1-methoxyphenyl-1 phenyl ethane, 3-phenyl-1-propanol, bromobenzene, m-dichlorobenzene, 1,2-dibromoethane, o-dichlorobenzene, bis(1,1,1,3,3,3 α-hexafluoroisopropyl)terephthalate, and other halogenated or, preferably, fluorinated aromatics.

In a preferred embodiment of the invention the small guest molecule is a molecule of the formula III: 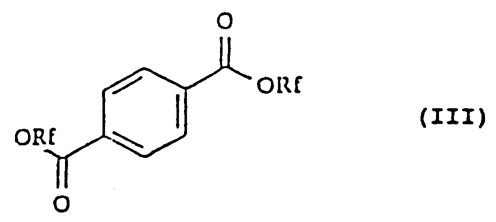
wherein Rf is C₁-C₁₀ alkyl, C₆-C₁₀ aryl or a partially or fully halogenated C₁-C₁₀ alkyl or C₆-C₁₀ aryl group.

The production and properties of the poly-(2-fluoroacrylic acid fluoroalkyl esters) are known in the art (see EP 128516). Polymerization of monomers is conducted in solution or suspension by radical initiation in the presence of a chain transfer agent at a temperature approximately between 0° and 100°C.

The polymer matrix compound can optionally be produced by free radical polymerization in solution in the presence of an initiator. Suitable radically acting initiators useful in such polymerizations are azo compounds such as azo-bis-isobutyronitrile, azo-bis-(cyclohexylcarbonitrile), azo-bis-(t-octane), 2-phenylazo-2,4-dimethyl-4-methoxyvaleronitrile and organic peroxides such as t-butyl peroxide, t-butyl peroctanoate, t-butyl peroxyisopropylcarbonate, t-butyl hydroperoxide, t-butyl peroxyisobutyrate, and dicumyl peroxide. The quantity of the initiator lies in the range from 0.001 to 3.0 moles, preferably 0.036 to 1.0 moles per 100 moles of monomer.

The polymerization may also take place in the presence of a chain transfer medium (regulator or agent). Especially suitable for this are mercaptans such as n- or t-butyl mercaptan, propyl mercaptan, phenyl mercaptan, t-hexyl mercaptan and butylene-1,4-dithiol as well as esters of mercaptoacetic acid, e.g. methylmercaptoacetate, ethylene glycol-bis(mercaptoacetate).

The polymerization temperature should be in the range of 20° to 180°C, preferably 40° to 160°C, and more preferably 60° to 140°C.

It is recommended that the mixture be degassed before polymerization. For this purpose the reaction mixture of monomer, unreactive small molecule, one or more initiators and regulators is first cooled in a reactor to a temperature of at least -80°C, then the reactor is evacuated and warmed in the closed state to a temperature of 0° to 25°C. This process is preferably repeated several times. Alternatively, the reaction mixture may have a stream of hydrogen, helium, argon or nitrogen gas which is passed down to the floor of the reactor through an immersed gas pipe for a period of a 1 to 60 min, preferably 5 to 30 min.

### FABRICATION METHODS

One general methodology useful to make preforms and optical fiber in accordance with the present invention is described in U.S. Patent No. 4,521,351.

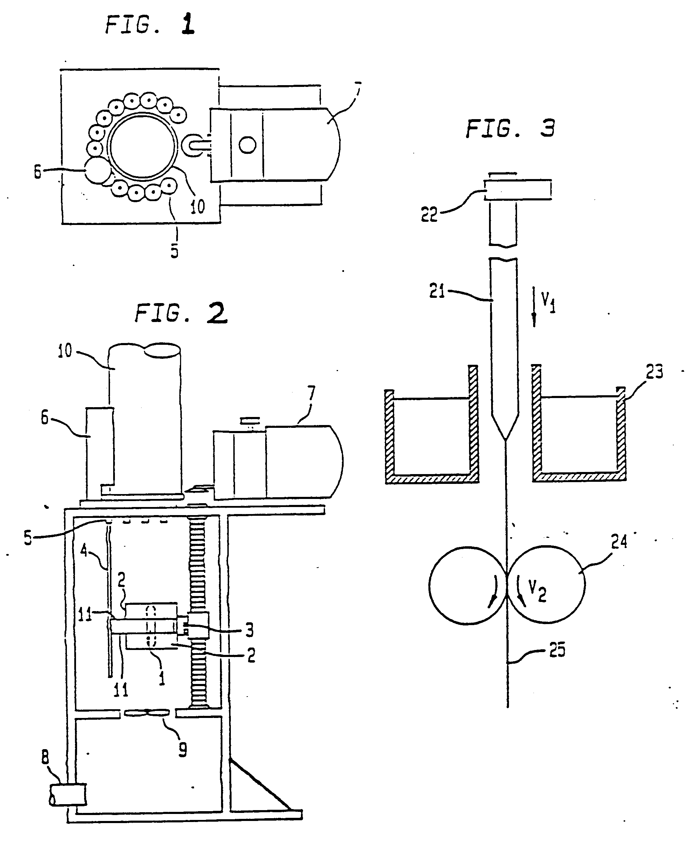

Referring to Figs. 1 and 2, a monomeric mixture of the mononer and small guest molecule is filled in glass tube 4 having a closed end and an inside diameter of about 3 mm to about 10 nm. A tubular ultraviolet lamp 1 is located centrally in the apparatus, and a cylindrical light-shielding plate 2 is secured to each of the upper and lower sections of the lamp 1 so that the mixture in the glass tube 4 is irradiated only by ultraviolet light released from the central portion of the tubular lamp. A collar-like auxiliary light-shielding plate 11 is provided so that the light from the lamp 1 is released only into the space between the light shielding plates 2 (for example, 70 mm). The intensity of ultraviolet light is monitored by a silicon photocell 3. The intensity of the ultraviolet light is preferably maintained constant during polymerization. A plurality of glass tubes 4 filled with the monomeric mixture are mounted on a support member 5 at a predetermined distance, for example 10 cm, from the ultraviolet lamp 1, and rotated at a speed of, for example, 40 rpm by a motor 6. Initially, the ultraviolet lamp, for example, a 400 W lamp, is placed at a position lower than the lower ends of the glass tubes 4, and ultraviolet light is irradiated onto the glass tubes 4 while the lamp 1 is moved upwardly by a motor 7 at a predetermined rate of, for example, 0.3 to 3.0 mm/min. Air at a fixed temperature is sent into the apparatus by a fan 9 from an inlet 8, and discharged from a discharge opening 10. The temperature of the inside of the apparatus rises due to the generation of heat from the lamp 1, but becomes constant at a temperature some degrees higher than the temperature of the air current.

Photopolymerization by a free radical mechanism starts at the outside portions of the bottoms of the glass tubes 4 which are first exposed to ultraviolet radiation. Volume shrinkage may occur due to polymerization. But since unreacted monomeric mixture is fed from that part in the upper section of each of the glass tubes which has not yet undergone ultraviolet irradiation, no space is formed inside the polymer matrix.

With the movement of the lamp 1, polymerization proceeds gradually upward until all of the monomeric mixture in each glass tube 4 is solidified. After the lapse of a predetermined period of time from the start of irradiation, for example about 10 hours, the ultraviolet irradiation is stopped, and the glass tubes 4 are removed from the apparatus. The glass tubes may then be heated to a temperature sufficient to polymerize the remaining monomers as completely as possible. This temperature is dependent on the type of polymer system being used, and should preferably be a temperature above that of the interior of the polymerization apparatus.

After polymerization is completed, the glass tubes are crushed, and the preform rods are taken out. Each of the rods show a fixed refractive index distribution except at the end portions. Light-converging fibers can be obtained by beating and stretching each of the resulting rods (light-transmitting elements). It is recommended that prior to heating and stretching of the rods, the rods are left to stand under a reduced pressure of 10⁻⁵ to 10⁻¹ mmHg at 50°C for 3 to 4 days in order to remove traces of volatile substances contained in the rods. The post treatment may also apply a heat-shrinking tube whereby bubble formation is suppressed.

Fig. 3 shows a heat-drawing apparatus showing the principle on which the rods are heat-drawn into optical fibers. Typically a rod of less than half a meter in length is mounted on a support member 22, and then allowed to descend very slowly at a velocity V₁ (mm/sec), passed between heaters 23 at a fixed temperature Td, and pulled and stretched at a greater velocity of V₂ mm/sec by a drive roll 24 below.

The following examples pertain to advantageous use of certain fluorinated homopolymers in accordance with the present invention wherein the high refraction index monomer or small molecules are distributed as refractive components in a gradient from the core to the cladding portion of the optical fiber.

### EXAMPLE 1

### Monomeric mixture for production of P3FMA tube:

Poly(trifluoroethyl methacrylate) graduated index plastic optical fiber (P3FMA GRIN POF) was produced as follows:

### (a) Preparation of tube/cladding.

A monomer mixture comprising 3FMA (1,1,1-trifluoroethyl methacrylate) monomer with the addition of benzoyl peroxide (BPO), 0.5 wt% (weight percent), as an initiator; n-lauryl mercaptan 0.1 wt% as a chain transfer agent was prepared. The mixture was placed in a glass tube with a 20 mm inner diameter. After being sealed on opposite ends, the glass tube was placed for thermal polymerization of the monomeric mixture horizontally in furnace at 70°C.

The tube was rotated about its center axis at 2000 rpm for a polymerization time of about 20 h. After polymerization the outer glass tube was broken and removed. The outer and inner diameter of the P3FMA tube product or cladding was 20 mm and 12 mm, respectively.

### (b) Preparation of GRIN preform rod:

A monomeric mixture comprising 3FMA monomer and the substantially unreactive small molecule, Dibutyl phthalate (DBP), in a 3FMA/DBP weight ratio of 5/1; with the addition of 0.5 wt%: 1,1-Bis (t-butylperoxy)3,5,5-trimethylcyclohexane (PH3M) as initiator; and 0.1 wt% n-lauryl mercaptan as chain transfer agent was prepared.

The P3FMA tube produced in step (a) was filled with the monomer mixture and sealed, then placed horizontally in a furnace at 95°C. for thermal polymerization while rotating at about 30 rpm. The polymerization time was about 24 h.

As a post-treatment, the preform rod was heat-treated at 100°C under about 0.2 mm Hg atmosphere for 24 h. The resulting polymer had a content of residual unreacted monomer of 0.5 wt.% or less. The cladding and core portions were thus integrated into a monolith.

### (c) Preparation of GRIN POF:

After the GRIN preform monolithic rod was cut at opposite ends, the preform rod was heat-drawn at 200°C. to form an optical fiber of about 0.6 mm diameter.

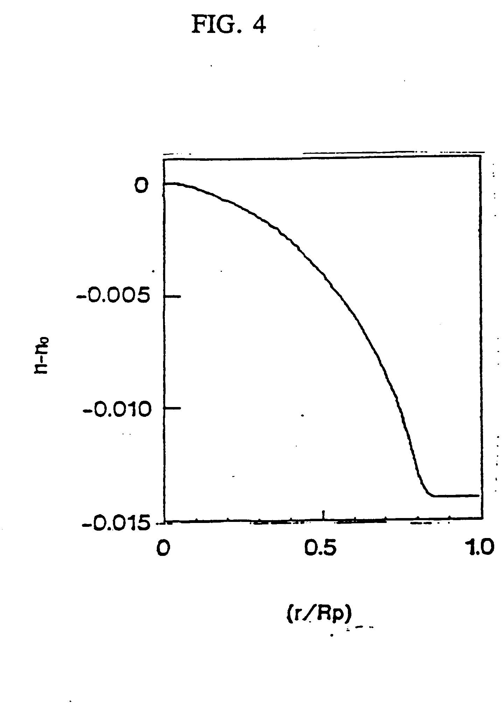

A refractive index distribution of the preform (shown in Fig. 4) was measured by the interferometric technique.

### (d) Optical Property of the P3FMA GRIN POF

The bandwidth of the GRIN POF was measured as follows:

A pulse of 10 MHz from a laser diode (InGaAlP; wavelength =670 nm) was introduced (N.A.=0.5) into a 40m long sample fiber. The output pulse was detected by sampling head (model 00S-01, Hamamatsu Photonics Co.).

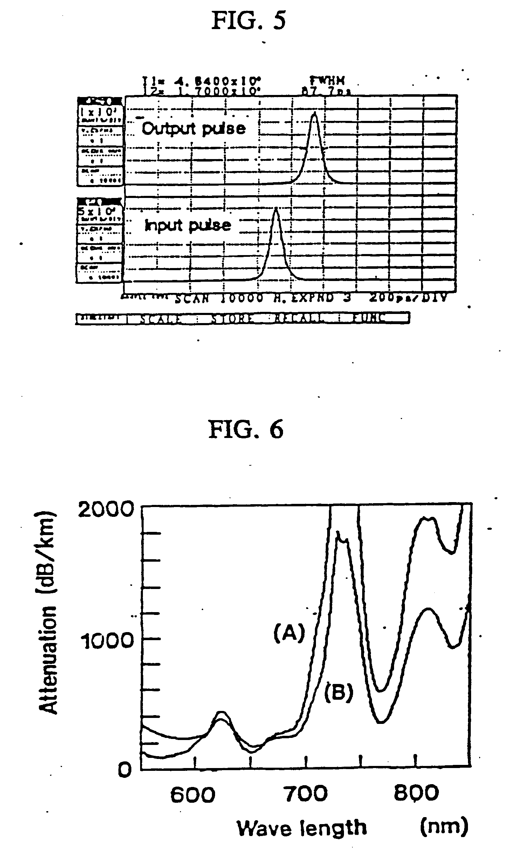

The result is shown in Fig. 5. The bandwidth was estimated from the 3dB level in impulse response function.

The bandwidth of the 40 m fiber length of P3FMA GRIN POF with the FWHM ("full width at half maximum") of the input pulse at 80.5 ps and output at 87.5 ps. was 632 MHz/km.

A total attenuation spectrum of the GRIN POF is shown in Fig. 6.

### EXAMPLE 2

A GRIN POF utilizing a fluorinated monomer base prepared as described in this example at a diameter of 0.6mm exhibited the following optical characterization. The attenuation of transmission at 780 nm wavelength was found to be about 200 dB/km and apparently much lower than that of comparatively prepared methyl methacrylate (MMA)-base GRIN POF (700dB/km).

The cladding material was composed of the pure homopolymer, poly(HFIP2FA). The advantage of such a composition is that there is no need to use a highly perfluorinated cladding material with the concomitant disadvantages of low optical clarity and crystallinity.

### (a) Preparation of HFIP2FA tube cladding:

A monomer mixture comprising HFIP2FA monomer, 0.06 wt.% of Benzoyl peroxide (BPO) as an initiator and 0.10 wt.% of n-lauryl mercaptan as a chain transfer agent was prepared. The mixture was placed in a glass tube with a 10mm inner diameter, a tube cladding was produced by the method of Example 1(a), above.

The mixture was placed in a glass tube with a 10 mm diameter, both ends were sealed and the glass tube was placed horizontally in a furnace as in the method of Example 1(a). The tube was rotated about its axis at 1000 rpm at 70°C for about 80 h. The outer and inner diameters of the resulting HFIP2FA polymer cladding tube were approximately 10 mm and 6 mm, respectively.

### (b) Preparation of GRIN Preform Rod:

A monomer mixture comprising HFIP2FA monomer with Dibutyl phthalate (DBP) as the unreactive small molecule component in a HFIP2FA/DBP weight ratio of 10/1, with 0.25 wt% t-Butyl peroxy isopropylcarbonate (BPPC) (from Nippon Oil and Fats Co.) as initiator, and 0.10 wt.% n-lauryl mercaptan as the chain transfer agent was prepared. The polymerization temperature of the mixture is 95°C.

The tube cladding was placed within a heat shrink tube (FEP-090 from Flon Kogyo Co.), filled with monomer mixture sealed and placed in a furnace. After a 20 h polymerization at the mixture polymerization temperature with rotation, each preform rod with heat shrink tube was heat treated at 110°C under normal pressure for one day followed by heat treatment without the heat-shrink tube at 110°C for 20 h under a pressure of 0.2 mm Hg.

### (c) Preparation of GRIN POF:

The GRIN POF was obtained by the heat drawing of the above GRIN preform rods at 200-220°C. The optical fiber obtained was 0.6 mm in diameter and 50 m long.

Following polymerization of the tube cladding, the tube had a slightly yellow coloration rendering it less desirable for manufacture of optical fiber. Tube cladding produced under Example 3 below was transparent and used to produce optical fibers with the lowest attenuation.

### EXAMPLE 3

To reduce the formation of color, it was found that the initiator azobisisobutylonitrile (AIBN) could be substituted for benzoyl peroxide in the procedure of Example 2 and the polymerization temperature reduced. Specific formulations were:

### (a) Tube Cladding:

Monomer: HFIP2FA,
Initiator: 0.05 wt% AIBN
Chain Transfer agent: 0.15% n-lauryl mercaptan;

### (b) Preparation of Preform Rod:

Monomer: HFIP2FA,
Unreactive Component: dibutyl phtalate (DBP),
Feed ratio of 10/1, HFIP2FA/DBP,
Initiator: AIBN 0.07 wt%
Claim transfer agent: 0.10% n-lauryl mercaptan
Polymerization Temperature: 65°C.

### Optical properties:

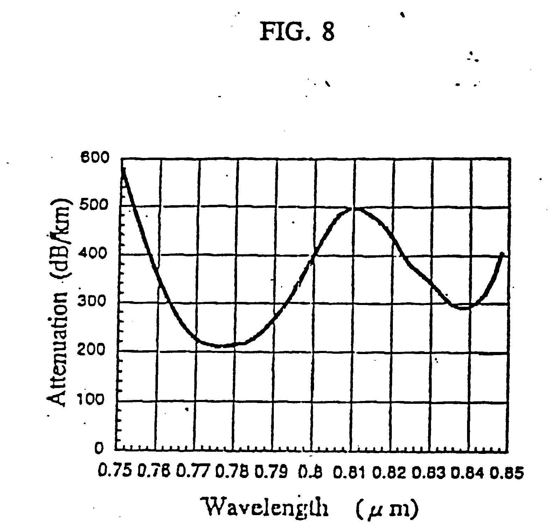

The optical fiber of Example 3 exhibited a lower attenuation than that of Example 2. A refractive index distribution of the preform of Example 3 was measured by the transverse interferometric technique. The total attenuation spectrum of the GRIN POF of Example 3 is shown in Fig. 8. The minimum attenuation of transmission is only 209.1 dB/km at 780nm wavelength measured incidentally with a commercially available Laser Diode. In contrast, the attenuation numbers of PMMA-based and 3FMA-based GRIN POF at 780 nm are about 700 dB/km and 400 dB/km, respectively.

### EXAMPLE 4

Following the procedure of Example 2 a GRIN POF fiber may be prepared using a monomer of the structural formula IV: 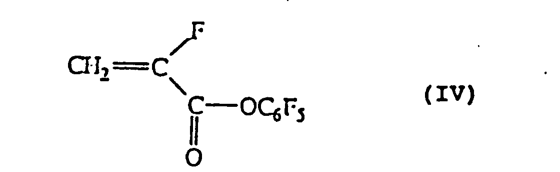
for both tube cladding and core of the preform.

### EXAMPLE 5

Following the procedure of Example 2 a GRIN POF fiber may be prepared using a monomer of the structural formula V: 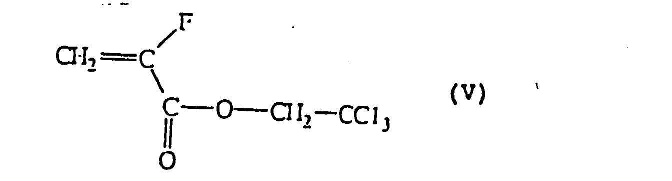
for both tube cladding and core of the preform.

## Claims

1. A monolithic thermoplastic article comprising a fluorinated polymer component and a substantially inert low molecular weight guest molecule component, which guest molecule component is substantially unreactive with the polymer component but soluble therein and exhibits a refractive index different from that of the polymer component; and wherein the concentration of the guest molecule component within the article exhibits a concentration gradient from the center to the periphery of the article defined during the formation thereof so that the article exhibits a graduated refractive index dependent from the concentration gradient from the center of the article to the periphery of the article, the graduated refractive index at the center being different from that at the periphery.

2. The monolithic thermoplastic article of claim 1, wherein the low molecular weight guest molecule component has a refractive index about 0.001 units higher than that of the fluorinated polymer component.

3. The monolithic article of claim 1, wherein the low molecular weight guest molecule component has a refractive index about 0.005 units higher than that of the fluorinated polymer component.

4. The monolithic thermoplastic article of claim 1, wherein the concentration of the substantially unreactive low molecular weight guest molecule component is from about 1% to about 20% of the weight of the article.

5. The monolithic thermoplastic article of claim 1 wherein the article is in the shape of a cylindrical preform and is useful in the manufacture of optical fibers.

6. The monolithic article of claim 1, wherein the article is an optical fiber.

7. The monolithic thermoplastic article of claim 1, wherein the fluorinated polymer comprises a monomer having a formula (I): 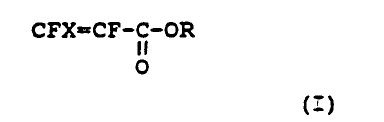 where in X is a hydrogen atom or a deuterium atom and R is a linear, branched or cyclic C₁-C₁₀ alkyl or a C₆-C₁₀ aryl.

8. The monolithic thermoplastic article of claim 6 wherein the hydrogen atoms in R are partially or completely replaced by fluorine, chlorine or bromine.

9. The monolithic thermoplastic article of claim 1 wherein the fluorinated polymer comprises a monomer having a formula (II): 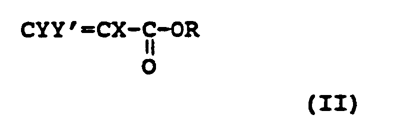 wherein X is hydrogen, deuterium, fluorine or a C₁-C₆ alkyl group, Y is a hydrogen atom or a deuterium atom, Y' is a hydrogen atom or a deuterium atom, and R is a linear, branched or cyclic C₁-C₁₀ alkyl group.

10. The monolithic thermoplastic article of claim 8 wherein the hydrogens of X, when X is C₁-C₆ alkyl, or the hydrogens of R are totally or partially replaced by fluorine.

11. The monolithic thermoplastic article of claim 1 wherein the fluorinated polymer is poly-(trifluoromethyl methacrylate) or poly-(hexafluoroisopropyl 2-fluoracrylate).

12. The monolithic thermoplastic article of claim 1 wherein the low molecular weight guest molecule component is a molecule of the formula III: 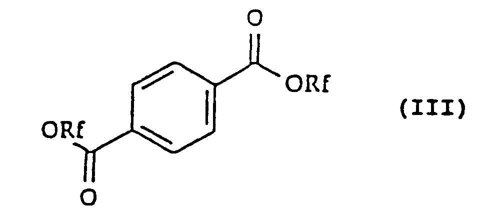 wherein Rf is C₁-C₆ alkyl, C₆-C₁₀ aryl or a partially or fully fluorinated C₁-C₆ alkyl, or a partially or fully fluorinated C₆-C₁₀ aryl group.

13. The monolithic thermoplastic article of claim 1, 6 or 8 wherein the low molecular weight guest molecule component is selected from the group consisting of dibutyl phthalate, benzyl benzoate, butyl phenyl phthalate, benzyl-n-butylphthalate, 1-methoxyphenyl-1 phenyl ethane, 3-phenyl-1-propanol, bromobenzene, m-dichlorobenze, 1,2-dibromoethane, o-dichlorobenzene, bis (1,1,3,3,3, α-hexafluoroisopropyl) terephthalate, or a fluorinated aromatic compound.

14. The monolithic thermoplastic article of claim 10 wherein the low molecular weight guest molecule component is dibutyl phthalate.

15. A process for the production of a monolithic fluorinated polymer based article having a graduated refractive index from its center to its periphery comprising; polymerizing in a suitable vessel a fluorinated monomer in the presence of and in solution with a substantially unreactive, low molecular weight guest molecule which is soluble in the monomer and polymer, and which has a different refractive index from that of the fluorinated polymer; by initiating the polymerization of the monomer at the surface of the vessel and allowing it to proceed at a controlled rate so that the guest molecule component forms a concentration gradient within the article as the polymerization progresses from the periphery to the center of the article to form a monolithic article with the refractive index being radially graduated from the center to the periphery.

16. The monolithic fluorinated polymer based article produced by the method of claim 15.

17. A polymer optical fiber exhibiting low optical dispersion and high bandwidth formed by polymerizing a fluorinated monomer to form a matrix polymer in the presence of an optically compatible, substantially unreactive low molecular weight guest molecule having a higher refractive index than the matrix polymer formed from the fluorinated monomer, wherein the concentration of the guest molecule in the fiber is defined by a concentration gradient which is greater at the center of the fiber than at the periphery, the fiber having a graduated refractive index profile defined radially by the relative concentration ratio of the polymer and the substantially unreactive low molecular weight guest molecule, with the center having higher refractive index than the periphery.

18. The optical fiber of claim 17, wherein the fiber exhibits a low overall light attenuation effect, dB/km, ranging from about 200 to about 400.

19. The polymer optical fiber of claim 17 wherein the low molecular weight guest component is fluorinated.

20. The polymer optical fiber of claim 17 wherein the monomer is partially deuterated.

21. The polymer optical fiber of claim 17 wherein the matrix polymer is a polymeric 2-fluoroacrylic acid ester.

22. The polymer optical fiber of claim 17 wherein the matrix polymer is poly(trifluoroethyl methacrylate) or poly(hexafluoroisopropyl 2-fluoroacrylate).

23. The polymer optical fiber of claim 17 wherein the guest molecule is dibutyl phthalate.
